# EUROPEAN PATENT APPLICATION

(11) **EP 1 072 496 A2**
(43) Date of publication of application: **31.01.2001**
(21) Application number: 00202765.4
(22) Date of filing: 27.07.2000
(51) Int. Cl.: B62D 1/04

(54) **Steering wheel and method of making same**

(30) Priority: 29.07.1999 US 363054
(71) Applicant: Delphi Technologies, Inc., Troy, MI 48007 (US)
(72) Inventor: van Jaarsveld, Robert P., Macomb, MI 48044 (US); Filipp, William J., Shelby Township, MI 48315 (US); Hanson, Craig M., Kettering, OH 45429 (US); Shah, Suresh D., Troy, MI 48098 (US)
(74) Representative: Denton, Michael John

(57) **Abstract**

A steering wheel (10) for a vehicle includes a rigid inner core (20) and a soft outer skin (22) covering the rigid inner core (20) being co-molded and formed as one-piece.

## Description

### TECHNICAL FIELD

The present invention relates generally to steering wheels and, more particularly, to a steering wheel and a method of making the same for a vehicle.

### BACKGROUND OF THE INVENTION

It is known to provide a steering wheel for a vehicle. One example of a steering wheel includes a frame, a padding portion covering the frame, and an outer wrap covering the padding portion. Usually the outer wrap is of a leather-type material.

Another example of a steering wheel is a frame with a self-skinning padding portion covering the frame. In the past, this type of steering wheel was manufactured using a multi-step process, whereby the frame was cast or molded, and then the padding portion was molded over the frame. Then, the padding portion could be painted to achieve a desired color. The frame could be made from a metal material or a plastic material. An example of a method to make a steering wheel using a multi-step process is disclosed in commonly assigned U.S. Patent Application Serial No. 09/088,545, and entitled "Method of Making A Steering Hand Wheel Insert", the disclosure of which is hereby incorporated by reference.

Although the above-described multi-step process and steering wheel functions well, it is desirable to reduce the number of separate components and steps associated with the manufacture of a steering wheel. It is also desirable to reduce the relative cost of the steering wheel. Therefore, there is a need in the art to provide an improved steering wheel and method of making the same using a one-step process.

### SUMMARY OF THE INVENTION

It is, therefore, one object of the present invention to provide an improved steering wheel formed as one-piece.

It is another object of the present invention to provide a method of making a steering wheel in a one-step process.

To achieve the foregoing objects, the present invention is a steering wheel for a vehicle including a rigid inner core and a soft outer skin covering the rigid inner core being co-molded and formed as one-piece.

Also, the present invention is a method of making a steering wheel for a vehicle. The method includes the steps of injecting material for a soft outer skin into a mold having a mold cavity and an injection drop. The method also includes the steps of co-injecting a material for a rigid inner core into the mold cavity through the injection drop after the soft outer skin material is injected into the mold cavity. The method also includes the steps of injecting a gas into the mold cavity to distribute the soft outer skin material and rigid inner core material throughout the mold cavity to form the steering wheel.

One advantage of the present invention is that an improved steering wheel and method of making the same is provided for a vehicle. Another advantage of the present invention is that the steering wheel integrates a plurality of components into a single component. Yet another advantage of the present invention is that the steering wheel reduces the number of separate components, cost and tooling associated with the same. Still another advantage of the present invention is that the method of making the steering wheel is a one step, co-injection process.

Other objects, features and advantages of the present invention will be readily appreciated, as the same becomes better understood after reading the subsequent description taken in conjunction with the accompanying drawings.

### BRIEF DESCRIPTION OF THE DRAWINGS

Figure 1 is a front elevational view of a steering wheel, according to the present invention.
Figures 2A through 2C are views similar to Figure 1 illustrating the steps of a method, according to the present invention, of making the steering wheel of Figure 1.
Figure 3 is a fragmentary front elevational view of an overflow cavity, used by the method of Figures 2A-2C.
Figure 4 is an enlarged fragmentary view of the overflow cavity used by the method of Figures 2A-2C.
Figures 5A through 5D are views similar to Figure 1 illustrating the steps of another embodiment, according to the present invention, of a method of making the steering wheel of Figure 1.

### DESCRIPTION OF THE PREFERRED EMBODIMENT

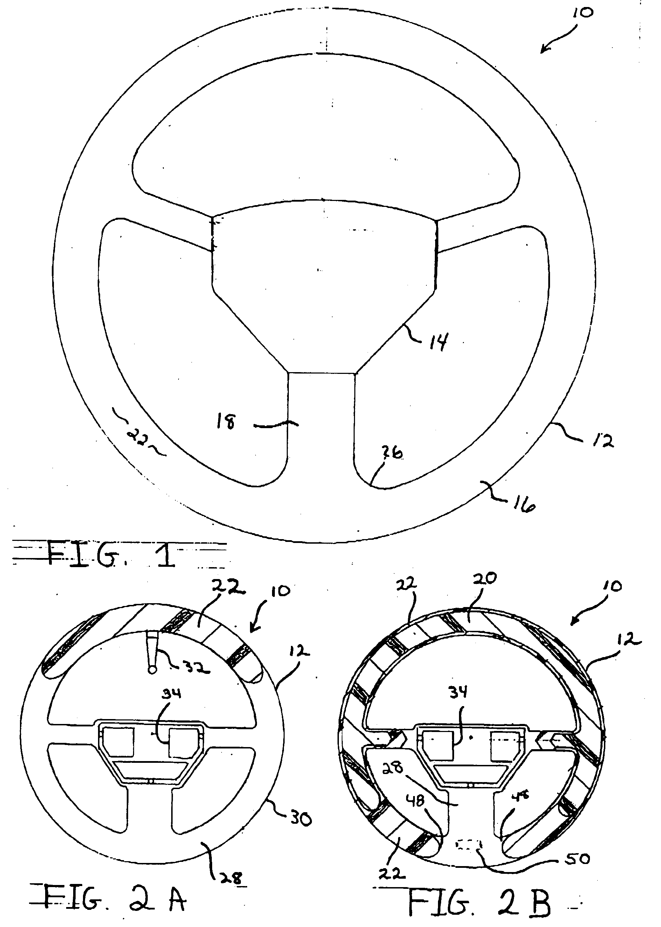

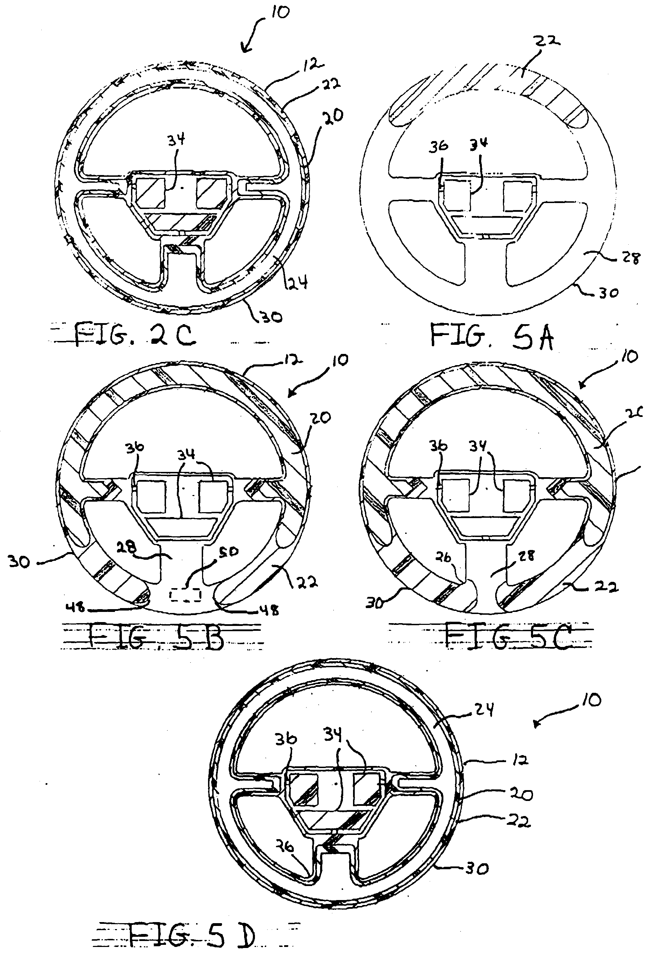

Referring to the drawings and in particular Figure 1, one embodiment of a steering wheel 10, according to the present invention, is shown for a vehicle (not shown). The steering wheel 10 is operatively connected to a steering mechanism (not shown), as is known in the art. It should be appreciated that a vehicle operator's hands (not shown) typically grip the steering wheel 10 to guide the vehicle in a desired direction.

The steering wheel 10 includes an inner rim 14, an outer rim 16 circumscribing the inner rim 14, and at least one spoke 18 interconnecting the inner rim 14 and the outer rim 16 to form a frame 12 that defines a shape of the steering wheel 10. The outer rim 16 is generally circular in shape, while the inner rim 14 can be circular shaped, rectangular, or the like. The inner rim 14, outer rim 16 and spoke 18 form an integral and one-piece steering wheel 10. It should be appreciated that the inner rim 14 may include an aperture (not shown) or platform (not shown) for operatively mounting the steering wheel 10 to the steering mechanism, or mounting an air bag assembly (not shown) to the steering wheel 10 as is known in the art.

Referring to Figures 2A through 2C, the frame 12 includes a rigid inner core 20, a soft outer skin 22 covering the rigid inner core 20 and a channel 24 that is hollow extending longitudinally through the rigid inner core 20. In this embodiment, the frame 12 has a generally circular cross-sectional shape. It should be appreciated that the cross-sectional shape of the frame 12 may be oval, rectangular, or the like.

The soft outer skin 22 acts as a cushion to provide the steering wheel 10 with a desired appearance and feel. Preferably, the soft outer skin 22 is made of a relatively flexible material such as a soft, thermoplastic elastomer. Advantageously, a pigment is added to the thermoplastic elastomer to color the soft outer skin 22 to a desired shade. Frequently, the color of the soft outer skin 22 matches an interior of the vehicle. It should be appreciated that an outer surface of the soft outer skin 22 may have a textured pattern (not shown) to enhance the appearance of the steering wheel 10.

The rigid inner core 20 provides structural support and rigidity to the steering wheel 10. Preferably, the rigid inner core 20 is made from a relatively rigid material such as a glass-filled thermoplastic material, preferably nylon. The rigid inner core 20 may have a hollow channel 24 extending therethrough, which may also add structural strength to the frame 12. It should be appreciated that a portion of the frame 12 may be solid and include cross-ribs (not shown), to prevent gas bleed through from one portion of the frame 12 to another, or to avoid short shots. The cross-ribs also provide structural integrity similar to a hollow box structure.

Preferably, the distribution of material for the soft outer skin 22 relative to material for the rigid inner core 20 is uniform. In this embodiment, the cross-sectional thickness of the soft outer skin 22 is approximately two and one-half to three millimeters (2.5-3mm) and the rigid inner core 20 is approximately two to five millimeters (2-5mm). The larger cross-sectional diameter of the rigid inner core 20 improves the rigidity of the frame 12. Also, in this embodiment, the rigid inner core 20 has a minimum wall thickness, such as two millimeters (2mm). To maintain a predetermined thickness of the rigid inner core 20, such as 3mm, a junction 26 between the outer rim 16 and spoke 18 or inner rim 14 arid spoke 18 requires a generous radius which, in this embodiment, is greater than 16mm.

Referring to Figures 2A through 2C, 3 and 4, a method, according to the present invention, of making the steering wheel 10 is illustrated. The method begins in Step A as illustrated in Figure 2A. In Step A, a short shot of a predetermined amount of the material for the soft outer skin 20 is injected into a mold cavity 28 for a mold 30 (to be described) through an injection drop 32. Preferably, the material for the soft outer skin 20 is a soft thermoplastic elastomer as previously described. For example, up to 97% by volume of the material for the soft outer skin 22 may be injected. The total amount of the material for the solid skin 22 injected includes an amount for the frame 12, plus a predetermined percentage of a volume of an overflow cavity 34, to be described.

The mold 30 includes the mold cavity 28 having substantially the same shape as the frame 12. The mold 30 also includes an injection drop 32 for directing the shot of material into the mold 30. Preferably, the injection drop 32 is located near a structurally less critical area, such as an upper portion of the mold cavity 28. Also, the number of injection drops 32 utilized depends on factors including the shape of the finished frame 12. The mold 30 may be operatively connected to a controller (not shown) for controlling the method as is known in the art.

The material for the soft outer skin 22 is injected through the injection drop 32 into the mold cavity 28 of the mold 30 at a predetermined rate and temperature, as is known in the art. One factor affecting the rate and temperature is the viscosity of the material. Preferably, the injection rate is optimized to control the frozen skin layer thickness that forms as the material cools. In this embodiment, the material for the soft outer skin 22 is injected near the melting point of the material, which for a soft thermoplastic elastomer is between 350-450° F.

Proceeding to Step B as illustrated in Figure 2B, the method including the step of co-injecting a short shot of a material for the rigid inner core 20 through the injection drop 32 into the mold cavity 28. In this example, the material for the rigid inner core 20 is co-injected sequentially, after substantially the entire volume of material for the soft outer skin 22 is injected. Preferably, the material for the rigid inner core 20 is a glass filled thermoplastic material such as nylon. The material for the rigid inner core 20 has a predetermined viscosity. Advantageously, the material for the soft outer skin 22 has a lower viscosity than the material for the rigid inner core 20. Therefore, the material for the soft outer skin 22 flows ahead of the material for the rigid inner core 20 and remains near an outer surface of the mold cavity 28 as it solidifies.

Proceeding to Step C as illustrated in Figure 2C, the method includes the step of injecting a gas into the mold cavity 28, such as by using a shot under pressure, as is known in the art. It should be appreciated that the material for the soft outer skin 22 and rigid inner core 20 is still in a molten state when the gas is injected. Preferably, the location of the gas injection drop 32 is diametrically opposite the last portion of the mold cavity 28 to fill. The gas is an inert gas, such as nitrogen. The gas expands evenly and takes the path of least resistance to distribute the flow of material for the soft outer skin 22 and rigid inner core 20 to an unfilled area of the mold cavity 28. The gas forms the hollow channel 24 extending through the rigid inner core 20 of the frame 12.

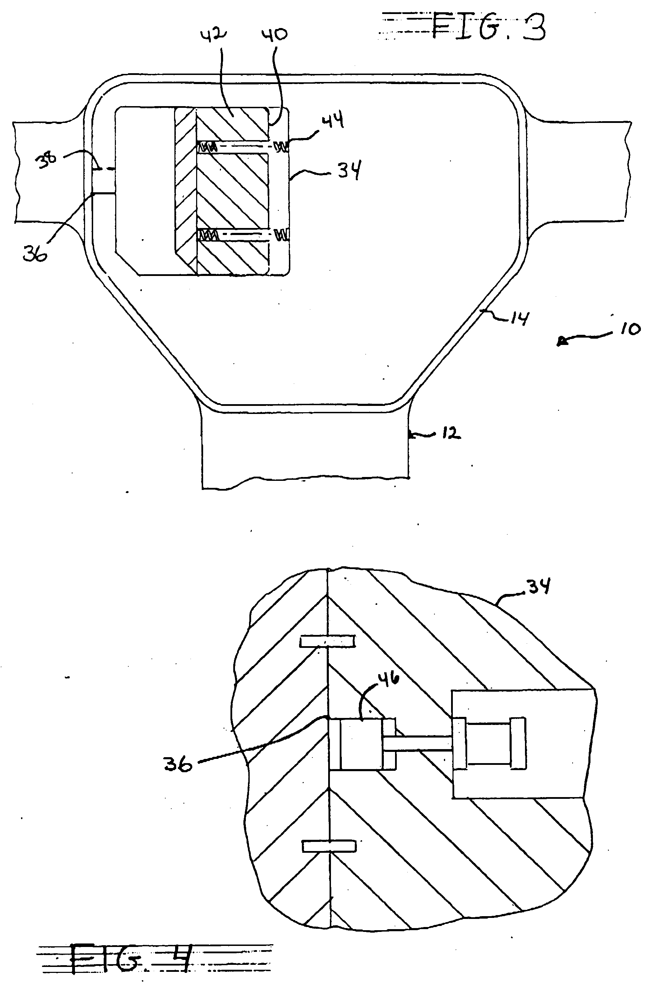

As the material for the rigid inner core 20 and soft outer skin 22 flows through the mold cavity 28, extra material for the soft outer skin 22, which flows ahead of the material for the rigid inner core 20, and some material for the rigid inner core 20, enters an overflow cavity 34 through a gate 36, as illustrated in Figures 3 and 4. It should be appreciated that the overflow cavity 34 can be of any shape or size. Advantageously, the overflow cavity 34 can be formed as a logo, or decorative feature or the like. The overflow cavity 34 may be located at an intersection of two converging flow fronts 48, which may occur near the last portion of the mold cavity 28 to fill, or by a feature, such as an aperture or platform previously described. Advantageously, the placement of the overflow cavity 34 at the intersection of two converging flow fronts 48, provides a pathway for any excess flow to avoid having only material for the soft outer skin 22 in a portion of the frame 12. The overflow cavity 34 may also be positioned near the junction 26 of the outer rim 16 or inner rim 14 and a spoke 18, to ensure uniform distribution of the material for the soft outer skin 22 and the rigid inner core 20. Otherwise, the material for the rigid inner core 20 may break through the soft outer skin 22.

As is known in the art, the connection between the mold cavity 28 and the overflow cavity 34 can be the gate 36. The opening of the gate 36 may be controlled by pressure on the gate 36. In one embodiment, the gate 36 is a thin wall tab gate 38, as illustrated in Figure 3. In another embodiment, the gate 36 is a spring loaded gate 40, also illustrated in Figure 3. The spring loaded gate 40 includes a plunger 42 that seals an opening of the gate 36. The plunger 42 includes a spring 44 disposed within the plunger 42. The pressure from the flow of material pushes the plunger 42 into the overflow cavity 34 and the overflow cavity 34 fills with material for the soft outer skin 22 or rigid inner core 20.

If the gate 36 is narrow, the material for the soft outer skin 22 and rigid inner core 20 solidifies and blocks the gate 36 before the gas reaches that portion of the mold cavity 28. Advantageously, the flow of material into the overflow cavity 34 ensures uniform material distribution for the soft outer skin 22 and rigid inner core 20 throughout the mold cavity 28.

Alternatively, the overflow cavity 34 can be hydraulically or pneumatically activated as illustrated in Figure 4. By selecting the overflow cavity 34 with a plunger shape, the overflow cavity 34 can be initially closed by moving the plunger forwards (not shown). The overflow cavity 34 opens as the moving flow of material exerts pressure on the plunger 46 during the gas injection portion of the method, allowing the material to enter the overflow cavity 34. It should be appreciated that a stationary gas flow restrictor 50, as known in the art, may be placed in the mold cavity 28 to direct the flow of gas during Step C. It should also be appreciated that if the channel 24 is not desirable in a particular portion of the frame 12, that portion may be filled with material for the soft outer skin 22 and rigid inner core 20 prior to the injection of gas. Advantageously, thin wall gas penetration is minimized and the desired soft outer skin material/rigid inner core material distribution ratio is obtained by the use of the stationary gas flow restrictor 50.

As it is understood in the art, at the end of gas injection step a small amount, such as three percent (3%), of material from the soft outer skin 22 may be injected into the mold 30 if there is hot sprue. This prepares the mold 30 for the next shot of material. The methodology also includes the step of cooling the mold 30 and removing the frame 12 from the mold 30. It should be appreciated that the frame 12 may then be finished, such as by breaking the overflow cavity 34 off from the frame 12 and discarding it.

Referring to Figures 5A through 5D, another embodiment, according to the present invention, of a method for making the steering wheel 10 is illustrated. The method begins in Step A in Figure 5A. In Step A, a predetermined amount of the material for the soft outer skin 22 is injected into the mold cavity 28 through the injection drop 32 in the mold 30. The predetermined amount of material for the soft outer skin 22 injected ranges from 20% to 80% of the total soft outer skin volume. Preferably, the amount of material for the soft outer skin 22 initially injected into the mold cavity 28 is a design choice that may be dependent upon the geometry of the frame 12, and the desired ratio of the material for the soft outer skin 22 versus the material for the rigid inner core 20.

Proceeding to Step B as illustrated in Figure 5B, the method includes the step of simultaneously co-injecting a material for the rigid inner core 20 and the remaining quantity of material for the soft outer skin 22 into the mold cavity 28 through the injection drop 32. Preferably, the injection drop 32 is positioned near an upper portion of the mold cavity 28. As is known in the art, the injection speed of the material for the soft outer skin 22 and rigid inner core 20 may be controlled by a controller, to maintain a uniform distribution of the material for the rigid inner core 20 to the material for the soft outer skin 22. Typically, more material for the soft outer skin 22 is injected than required for the finished frame 12. Since the viscosity of the material for the soft outer skin 22 is lower than that of the rigid inner core 20, any excess material for the soft outer skin 22 flows ahead of the material for the rigid inner core 20 and into the overflow cavity 34. In this way, the material for the rigid inner core 20 is evenly distributed throughout the mold cavity 28, thus eliminating the potential for having a wall made of only soft outer skin 22.

Proceeding to Step C as illustrated in Figure 5C, the method includes the step of continuing the flow of the material for the soft outer skin 22 and rigid inner core 20 throughout the mold cavity 28.

Proceeding to Step D as illustrated in Figure 5D, the method includes the step of injecting a gas immediately after the materials for the soft outer skin 22 and rigid inner core 20 are injected, and before they have solidified. The gas pushes the materials through the mold cavity 28, including the overflow cavity 34. The gas expands evenly to distribute the material for the soft outer skin 22 and material for the rigid inner core 20 to form a hollow, rigid walled channel 24 extending through the rigid inner core 20. The mold 30 is cooled and the frame 12 removed from the mold 30 and the frame 12 is finished, as it is known in the art.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A steering wheel (10) for a vehicle comprising:
a rigid inner core (20) and a soft outer skin (22) covering said rigid inner core (20) being co-molded and formed as one-piece.

2. A steering wheel (10) as set forth in claim 1 wherein said rigid inner core (20) includes a channel (24) extending at least partially through said rigid inner core (20).

3. A steering wheel (10) as set forth in claim 1 wherein a material for said rigid inner core (20) is a glass filled thermoplastic.

4. A steering wheel (10) as set forth in claim 1 wherein a material for said soft outer skin (22) is a soft thermoplastic elastomer.

5. A steering wheel (10) as set forth in claim 4 wherein said material for said soft outer skin (22) includes a pigment added to said thermoplastic elastomer to color said soft outer skin (22).

6. A steering wheel (10) as set forth in claim 1 wherein said soft outer skin (22) has an outer surface with a textured pattern.

7. A steering wheel (10) as set forth in claim 2 wherein said channel (24) is hollow.

8. A steering wheel (10) as set forth in claim 1 including a predetermined ratio of material for said soft outer skin (22) and said rigid inner core (20).

9. A steering wheel (10) as set forth in claim 1 including an inner rim (14), an outer rim (16) circumscribing said inner rim (14) and at least one spoke (18) interconnecting said inner rim (14) with said outer rim (16) to form a frame (12) comprising said rigid inner core (20) and said soft outer skin (22).

10. A method of making a steering wheel (10) for a vehicle comprising the steps of:
injecting material for a soft outer skin (22) into a mold (30) having a mold cavity (28) and an injection drop (32);
co-injecting a material for a rigid inner core (20) into the mold cavity (28) through the injection drop (32) after the material for the soft outer skin (22) is injected into the mold cavity (28); and
injecting a gas into the mold cavity (28) to distribute the material for the soft outer skin (22) and the material for the rigid inner core (20) throughout the mold cavity (28) to form the steering wheel (10).

11. A method as set forth in claim 10 wherein said step of co-injecting a gas into the mold cavity (28) also includes the step of removing the steering wheel (10) from the mold (30) after it has cooled and finishing the steering wheel (10) by removing the injection drop (32) and the overflow cavity.

12. A method as set forth in claim 10 wherein said step of injecting comprises injecting the material for the soft outer skin (22) at a predetermined rate and temperature.

13. A method as set forth in claim 10 wherein said step of co-injecting a gas includes forming a channel (24) extending longitudinally through the rigid inner core (20).

14. A method as set forth in claim 10 wherein material for the soft outer skin (22) has a lower viscosity than the material for the rigid inner core (20), and the material for the soft outer skin (22) flows through the mold cavity (28) ahead of the material for the rigid inner core (20) and near a surface of the mold cavity (28).

15. A method as set forth in claim 10 including the step of positioning a stationary flow restrictor (50) in the mold cavity (28) to direct the flow of gas.

16. A method as set forth in claim 10 including the step of positioning an overflow cavity (34) near an intersection of two converging flow fronts for the material of the soft outer skin (22) or rigid inner core (20).

17. A method as set forth in claim 16 including the step of receiving excess material for the soft outer skin (22) or rigid inner core (20) in the overflow cavity (34) and forming a uniform soft distribution of the material for the soft outer skin (22) and rigid inner core (20) throughout the mold cavity (28).

18. A method as set forth in claim 10 wherein said step of co-injecting the material for the rigid inner core (20) occurs simultaneously with said step of injecting the material for the soft outer skin (22).

19. A method as set forth in claim 18 wherein between twenty to eighty percent (20-80%) of a volume of the material for the soft outer skin (22) is injected into the mold cavity (28) before the material for the rigid inner core (20) and remaining material for the soft outer skin (22) is co-injected into the mold cavity (28).

20. A method of making a steering wheel (10) for a vehicle comprising:
injecting a short shot of a material for a soft outer skin (22) into a mold (30) having a mold cavity (28) and an injection drop (32);
co-injecting a short shot of a material for a rigid inner core (20) into the mold cavity (28) through the injection drop (32) simultaneously with the material for the soft outer skin (22);
injecting a gas into the mold cavity (28) to distribute the material for the soft outer skin (22) and the material for the rigid inner core (20) throughout the mold cavity (28), while forming a channel (24) extending longitudinally through the rigid inner core (20); and
removing and finishing the steering wheel (10).

21. A method as set forth in claim 20 wherein the material for the soft outer skin (22) is a soft thermoplastic elastomer.

22. A method as set forth in claim 20 wherein the material for the rigid inner core (20) is a glass filled thermoplastic.
